# EUROPÄISCHE PATENTSCHRIFT

(11) **EP 2 360 411 B1**
(45) Veröffentlichungstag und Bekanntmachung des Hinweises auf die Patenterteilung: **17.04.2013**
(21) Anmeldenummer: 11000256.5
(22) Anmeldetag: 14.01.2011
(51) Int. Cl.: F16L 37/088

(54) **Steckverbinder**
Connector
Connecteur à fiches

(30) Priorität: 12.02.2010 AT 2062010
(43) Veröffentlichungstag der Anmeldung: 24.08.2011
(73) Patentinhaber: Henn GmbH & Co.KG, 6850 Dornbirn (AT)
(72) Erfinder: Hartmann, Harald, 6850 Dornbirn (AT)
(74) Vertreter: Burger, Hannes

(56) Entgegenhaltungen:
- EP-A2- 1 705 417
- WO-A1-2009/094679
- DE-A1- 19 742 041
- US-A1- 2006 066 100

## Beschreibung

Die Erfindung bezieht sich auf einen Steckverbinder zum Verbinden von Leitungen für flüssige oder gasförmige Medien, mit einer Hülse, die eine Einstecköffnung aufweist, in die ein Stutzen einsteckbar ist, und einer die Hülse zumindest über einen Teil ihres Umfangs umgebende Rastfeder, welche zwischen einer Raststellung zum Verrasten des mit dem Steckverbinder zusammengesteckten Stutzens und einer gegenüber der Hülse verrasteten Freigabestellung, in der die Verrastung mit dem Stutzen gelöst ist und der Stutzen aus der Einstecköffnung der Hülse herausziehbar ist, verstellbar ist, wobei die Rastfeder zumindest in ihrer Raststellung über mindestens einen Abschnitt ihrer Längserstreckung, in welchem sie mit dem Stutzen verrastbar ist, durch eine Durchtrittsöffnung der Hülse in den von der Hülse umgebenen Innenraum ragt und wobei die Rastfeder in ihrer verrasteten Freigabestellung an mindestens einer Raststelle der Rastfeder hinter einen Haltevorsprung der Hülse in eine Haltevertiefung der Hülse eingerastet ist.

Derartige Steckverbinder, die auch als Schlauchkupplungen bezeichnet werden, werden insbesondere im Automobilbereich zur Verbindung von Ladeluftleitungen und Kühlwasserleitungen eingesetzt. Im geschlossenen Zustand der Steckverbindung ist der in die Einstecköffnung der Hülse des Steckverbinders eingesteckte Stutzen durch eine Rastfeder des Steckverbinders verrastet. Solche durch Verrastung mit dem Gegensteckverbinder verbindbare Steckverbinder werden auch als Schnellverschlusskupplungen bezeichnet.

Um die Steckverbindung wieder zu lösen, müssen die Abschnitte der Rastfeder, in welchen die Verrastung mit dem Stutzen erfolgt, bezogen auf die radiale Richtung, nach außen geführt werden. Es ist bekannt, eine verrastete Freigabestellung für die Rastfeder vorzusehen, die auch als "Parkposition bezeichnet wird, in welcher der Stutzen aus der Hülse herausziehbar ist. Der Vorteil ist die einfachere Handhabung, da nicht gleichzeitig mit der Betätigung der Rastfeder der Stutzen herausgezogen werden muss, sondern zunächst die Rastfeder in die verrastete Freigabestellung gebracht werden kann und danach der Stutzen herausgezogen werden kann.

Ein solcher Steckverbinder der eingangs genannten Art wird bereits in Serie hergestellt und im Automobilbereich zur Verbindung von Ladeluftleitungen und Kühlwasserleitungen eingesetzt. Die Hülse umfasst ein von einem gebogenen Blech gebildetes Hülsenteil, welches am einsteckseitigen Ende umgebogen ist, so dass die Hülse zweilagig ist und das Hülsenteil einen inneren und eine äußeren Mantelabschnitt bildet, zwischen welche das Ende eines Schlauchs eingepresst ist. Die Hülse weist weiters ein Kunststoffteil auf, das an der Außenseite des Hülsenteils an diesem befestigt ist und mit Endabschnitten der Rastfeder zusammenwirkt, um die Rastfeder in der Freigabestellung zu verrasten. Hierzu sind die beiden Enden der Rastfeder in die axiale Richtung der Hülse umgebogen und werden beim Öffnen der Rastfeder über den jeweiligen, radial nach außen vorspringenden Haltevorsprung des Kunststoffteils in die Haltevertiefung des Kunststoffteils geführt. Wenn die beiden Endabschnitte der Rastfeder in den Haltevertiefungen liegen, befindet sich die Rastfeder in ihrer verrasteten Freigabestellung, in welcher sie verbleibt, bis die Endabschnitte der Rastfeder durch Betätigung des Benutzers wiederum über die Haltevorsprünge zurück geführt werden.

Ein Steckverbinder dieser Art ist auch in der WO 2009/094 679 A1 dargestellt (die verrastete Freigabestellung ist aber nicht gezeigt und beschrieben).

Aufgrund der verschiedenen erforderlichen Biegungen der Rastfeder dieses vorbekannten Steckverbinders in verschiedenen Ebenen ist deren Ausbildung relativ aufwendig. Weiters ist das Handling der Rastfeder aufgrund der abgebogenen Endabschnitte, welche leicht verhaken können, von der Herstellung der Rastfeder bis zu ihrer Montage auf der Hülse erschwert.

Aus der EP 0 750 152 B1 und aus der DE 1 97 42 041 A1 gehen ein weiterer Steckverbinder mit einer Rastfeder hervor, welche eine verrastete Freigabestellung aufweist, wobei ein in axialer Richtung abgebogenes Ende der Rastfeder über einen radial nach außen vorstehenden Haltevorsprung (= eine Rastnocke) geführt ist.

Beim aus der WO 2005/045299 A1 bekannten Steckverbinder ist eine Verrastung der Rastfeder des Steckverbinders mit dem Stutzen an mindestens drei in Umfangsrichtung voneinander beabstandeten Riegelstellen beschrieben, wobei eine synchrone Verrastung von Abschnitten der Rastfeder erreicht wird.

Aufgabe der Erfindung ist es, einen verbesserten Steckverbinder der eingangs genannten Art bereitzustellen. Erfindungsgemäß gelingt dies durch einen Steckverbinder mit den Merkmalen des Anspruchs 1.

Beim Steckverbinder der Erfindung springt der Haltevorsprung gegenüber der Haltevertiefung in axialer Richtung der Hülse vor bzw. ist die Haltevertiefung gegenüber dem Haltevorsprung in axialer Richtung der Hülse zurückversetzt. Wenn beim Öffnen der Rastfeder, um diese von ihrer Raststellung in ihre verrastete Freigabestellung zu bringen, die Rastfeder im Bereich der Raststelle über den Haltevorsprung in die Haltevertiefung einfährt, erfährt sie im Bereich der Raststelle eine Auslenkung in axialer Richtung der Hülse. Insbesondere kann diese axiale Auslenkung der Raststelle mit einer Verwindung der Rastfeder einhergehen.

Durch eine solche "axiale Verrastung" der Rastfeder in ihrer verrasteten Freigabestellung (=Parkstellung) können in axialer Richtung abgewinkelte Endabschnitte der Rastfeder entfallen. Dadurch wird die Herstellung der Rastfeder vereinfacht. Auch das Handling der Rastfeder von ihrer Herstellung bis zur Montage wird erleichtert. Weiters kann eine Rastfeder, welche keine in axiale Richtung abgewinkelte Endabschnitte aufweist, einfacher magaziniert werden.

Es ist bevorzugt, dass die Rastfeder eine insgesamt in einer Ebene liegende Ausbildung aufweist.

Vorzugsweise ist die Rastfeder in ihrer verrasteten Freigabestellung an ersten und zweiten Raststellen, die in Umfangsrichtung der Hülse voneinander beabstandet sind, hinter einen jeweiligen Haltevorsprung in eine jeweilige Haltevertiefung eingerastet. Günstigerweise liegt die erste Raststelle im Bereich des einen Endabschnitts der Rastfeder und die zweite Raststelle im Bereich des anderen Endabschnitts der Rastfeder.

Vorteilhafterweise ist die Rastfeder des Steckverbinders in ihrer Raststellung mit dem mit dem Steckverbinder zusammengesteckten Stutzen an mindestens zwei, vorzugsweise mindestens drei, in Umfangsrichtung der Hülse bzw. des Stutzens voneinander beabstandeten Verriegelungsstellen verrastet.

In einer vorteilhaften Ausführungsform der Erfindung ragt die Rastfeder in ihrer verrasteten Freigabestellung im Bereich einer jeweiligen Raststelle durch einen Schlitz, der in einem Halteabschnitt der Hülse angeordnet ist und von dem ein Rand den Haltevorsprung und die Haltevertiefung zum Einrasten der Rastfeder an der Raststelle bilden. Der Halteabschnitt umgibt hierbei einen Mantelabschnitt der Hülse über zumindest einen Teil des Umfangs des Mantelabschnitts im Abstand zu diesem, so dass zwischen dem Mantelabschnitt und dem Halteabschnitt ein Zwischenraum vorliegt. Im Mantelabschnitt der Hülse ist die mindestens eine Durchgangsöffnung angeordnet, durch welche die Rastfeder zur Verrastung mit dem eingesteckten Stutzen zumindest in der Raststellung der Rastfeder tritt. In der Raststellung der Rastfeder liegen hierbei die beiden Enden der Rastfeder im Zwischenraum zwischen dem Halteabschnitt bzw. einem jeweiligen Halteabschnitt der Hülse und dem Mantelabschnitt der Hülse. Die Enden der Rastfeder sind somit geschützt, so dass beispielsweise eine Verletzungsgefahr durch die Enden der Rastfeder vermieden wird. Auch ein Abziehen der Rastfeder von der Hülse durch ein versehentliches Verhaken an einem Ende der Rastfeder kann dadurch vermieden werden.

In einer bevorzugten Ausführungsform der Erfindung weist die Hülse mindestens ein Hülsenteil auf, welches den Mantelabschnitt oder eine Lage des Mantelabschnitts der Hülse bildet. Weiters umfasst das Hülsenteil einen Verbindungssteg, der gegenüber dem Abschnitt des Hülsenteils, der den Mantelabschnitt oder eine Lage des Mantelabschnitts bildet, umgebogen ist und beispielsweise rechtwinklig zur Längsachse der Hülse steht. Mit diesem Verbindungsabschnitt ist über eine weitere Umbiegung der Halteabschnitt oder mindestens einer Halteabschnitte verbunden. Vorzugweise ist der Verbindungsabschnitt ringförmig ausgebildet. Denkbar und möglich wäre es auch, für jeden Halteabschnitt einen separaten Verbindungsabschnitt vorzusehen.

Das Hülsenteil bzw. ein jeweiliges Hülsenteil wird günstigerweise von einem gebogenen Rohrstück aus Blech gebildet.

Die Hülse kann somit insgesamt aus Metall ausgebildet sein, wodurch eine hohe Robustheit und Temperaturbeständigkeit erreichbar ist. Denkbar und möglich ist aber auch eine Ausbildung, bei welcher an einem Hülsenteil, das mindestens ein Teil des Mantelabschnitts der Hülse bildet, ein Kunststoffteil festgelegt ist, welches den mindestens einen Halteabschnitt aufweist.

Der Mantelabschnitt der Hülse ist vorteilhafterweise zweilagig ausgebildet, wobei zwischen den beiden Lagen auf der von der Einsteckseite abgewandten Seite ein Zwischenraum vorliegt, in welchen ein Schlauch einpressbar ist, an dem der Steckverbinder anzubringen ist. Die beiden Lagen können miteinander einteilig ausgebildet sein, wobei sie über eine Umbiegung um 180°, die beispielsweise am einsteckseitigen Ende der Hülse ausgebildet ist, miteinander verbunden sind. Weiters können die beiden Lagen auch von separaten, miteinander verbundenen, beispielsweise durch einen Presssitz, Hülsenteilen gebildet werden.

Wenn in dieser Schrift von "außen" und "innen" die Rede ist, so ist dies auf die Lage relativ zur zentralen Längsachse des Steckverbinders bzw. des Stutzens bezogen. Ein weiter außen liegendes Teil weist somit einen größeren Abstand von der zentralen Längsachse als ein weiter innen liegendes Teil auf.

Weitere Vorteile und Einzelheiten der Erfindung werden im Folgenden anhand der beiliegenden Zeichnung erläutert. In dieser zeigen:
- Fig. 1: eine Schrägsicht eines Steckverbinders gemäß einer Ausführungsform der Erfindung mit einem Abschnitt eines Schlauchs, an dem der Steckverbinder zu montieren ist, sowie einem mit dem Steckverbinder zusammensteckbaren Stutzen, im vom Steckverbinder getrennten Zustand;
- Fig. 2: eine stirnseitige Ansicht der Teile von Fig. 1;
- Fig. 3: einen Schnitt entlang der Linie AA von Fig. 2;
- Fig. 4: einen Schnitt entlang der Linie BB von Fig. 3;
- Fig. 5 und 6: eine Schrägsicht entsprechend Fig. 1 und eine Schnitt entsprechend Fig. 3, Teile des Steckverbinders auseinandergezogen dargestellt (der Blickwinkel von Fig. 5 ist gegenüber Fig. 1 leicht geändert);
- Fig. 7 und 8: Darstellungen entsprechend Fig. 5 und 6 in einem während der Montage vorliegenden Zustand, in welchem das zweite Hülseteil teilweise auf das erste Hülsenteil aufgesteckt ist;
- Fig. 9: eine Schrägsicht der Teile im Montagezustand entsprechend den Fig. 7 und 8, die Rastfeder in einer Position zum Aufstecken auf die Hülse;
- Fig. 10 und 11: Darstellungen entsprechend Fig. 7 und 8, die Rastfeder aufgesteckt (der Blickwinkel von Fig. 10 ist gegenüber Fig. 7 leicht geändert);
- Fig. 12: eine Schrägsicht des montierten Steckverbinders mit einem Abschnitt des Schlauchs und dem teilweise in den Steckverbinder eingesteckten Stutzen;
- Fig. 13: eine stirnseitige Ansicht der Teile von Fig. 12;
- Fig. 14: einen Schnitt entlang der Linie CC von Fig. 13;

- Fig. 15: einen Schnitt entlang der Linie DD von Fig. 14;
- Fig. 16: eine Darstellung entsprechend Fig. 12, der Stutzen aber vollständig eingesteckt und im Steckverbinder verrastet;
- Fig. 17: eine stirnseitige Ansicht der Teile von Fig. 16;
- Fig. 18: einen Schnitt entlang der Linie EE von Fig. 17;
- Fig. 19: einen Schnitt entlang der Linie FF von Fig. 18;
- Fig. 20: eine Schrägsicht des Steckverbinders und eines Abschnitts des Schlauchs und des herausgezogenen Stutzens, wobei sich die Rastfeder des Steckverbinders in ihrer verrasteten Freigabestellung (=Parkstellung) befindet;
- Fig. 21: eine stirnseitige Ansicht der Teile von Fig. 20;
- Fig. 22: einen Schnitt entlang der Linie GG von Fig. 21;
- Fig. 23: einen Schnitt entlang der Linie HH von Fig. 22;
- Fig. 24: eine Seitenansicht der Teile von Fig. 20, Blickrichtung II in Fig. 21;
- Fig. 25: eine Ansicht eines Steckverbinders mit einem Abschnitt eines Schlauchs und einem eingesteckten und verrasteten Stutzen gemäß einer zweiten Ausführungsform der Erfindung;
- Fig. 26: einen Schnitt entlang der Linie JJ von Fig. 25;
- Fig. 27: einen Schnitt entlang der Linie KK von Fig. 26;
- Fig. 28: eine Schrägsicht des Steckverbinders gemäß der zweiten Ausführungsform mit einem Abschnitt des Schlauchs und dem vom Steckverbinder getrennten Stutzen, das Halteteil der Hülse des Steckverbinders und das rohrförmige Hülsenteil der Hülse des Steckverbinders auseinandergezogen dargestellt.

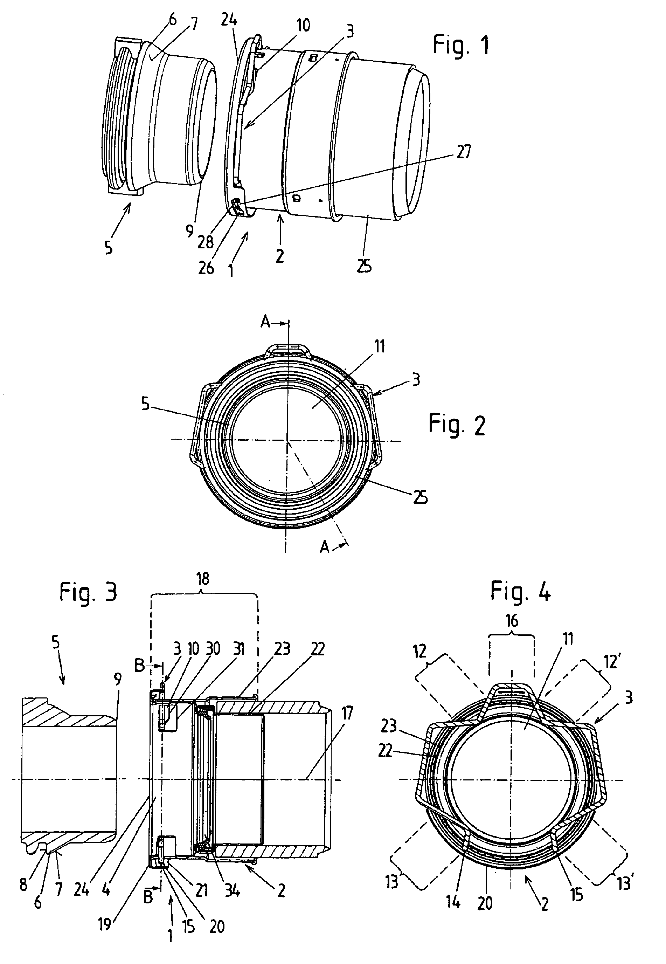

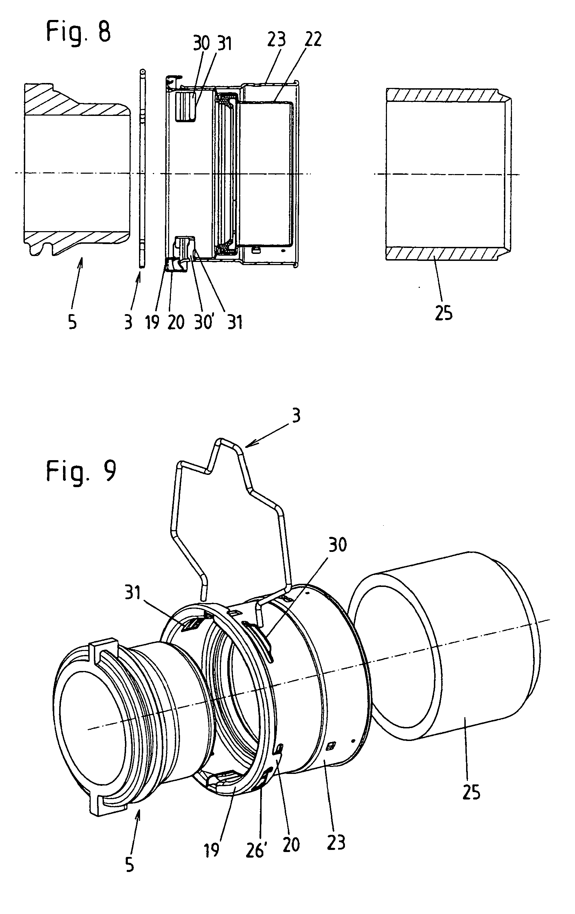

Ein erstes Ausführungsbeispiel der Erfindung ist in den Fig. 1 bis 24 dargestellt. Der Steckverbinder 1 umfasst eine Hülse 2, die eine zentrale Längsachse 17 aufweist, und eine auf dieser angeordnete Rastfeder 3, die die Hülse 2 über einen Teil des Umfangs der Hülse 2 umgibt.

Die Hülse 2 weist eine Einstecköffnung 4 auf, in welche ein Stutzen 5 einsteckbar ist, der den mit dem Steckverbinder zusammensteckbaren Gegenstecker bildet. Der Stutzen 5 besitzt eine, beispielsweise vollumfänglich umlaufend ausgebildete Rastschulter, welche eine Schrägfläche 7 und eine Verriegelungsfläche 8 umfasst. Die Schrägfläche steigt in die vom einsteckseitigen Ende 9 des Stutzens 5 weggerichtete Richtung an (d. h. vergrößert in diese Richtung ihren Abstand von der zentralen Längsachse des Stutzens 5). Die Verriegelungsfläche 8 dient zum Zusammenwirken mit der Rastfeder 3 im eingesteckten und verrasteten Zustand des Stutzens 5. Vorzugsweise sind hierbei mehrere in Umfangsrichtung des Stutzens 5 voneinander beabstandete Riegelstellen vorhanden, die jeweils mit Abschnitten der Rastfeder 3 zusammenwirken, im gezeigten Ausführungsbeispiel sind dies vier Riegelstellen, wobei auch mehr oder weniger Riegelstellen vorhanden sein können.

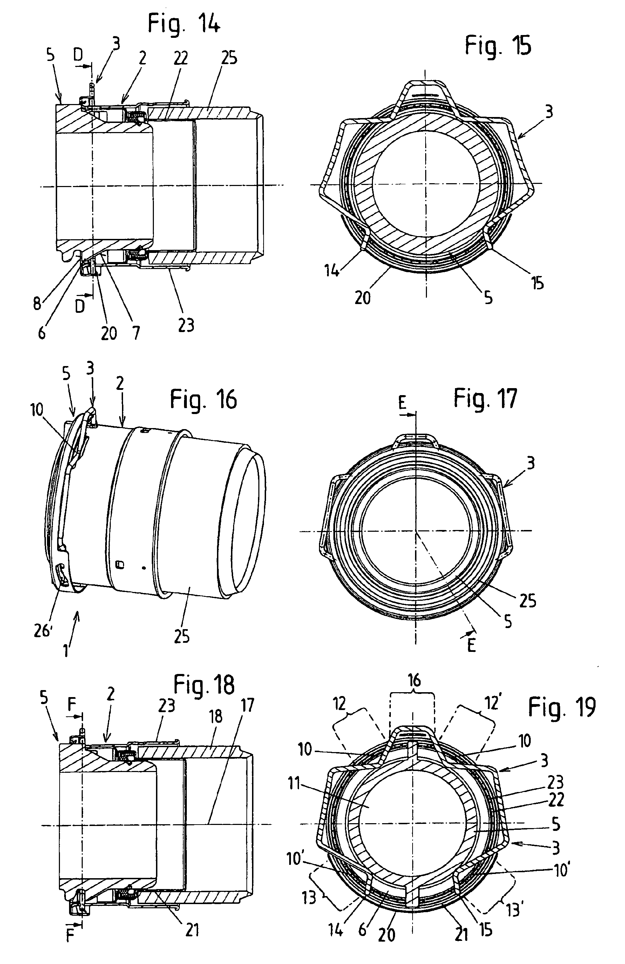

Die Hülse 2 weist mehrere, in Umfangsrichtung voneinander beabstandete Durchtrittsöffnungen 10, 10' auf. In der Raststellung der Rastfeder 3, welche diese im eingesteckten und verrasteten Zustand des Stutzens 5 einnimmt (vgl. Fig. 16 bis 19), ragt die Rastfeder 3 in jeweiligen Abschnitten 12, 12', 13, 13' ihrer Längserstreckung durch die jeweilige Durchtrittsöffnung 10, 10' in den von der Hülse 2 umgebenen Innenraum 11. In diesen Abschnitten 12, 12', 13, 13' wirkt die Rastfeder 3 an den Riegelstellen mit der Verriegelungsfläche 8 der Rastschulter 6 des eingesteckten und verrasteten Stutzens 5 zusammen.

Die Rastfeder 3 kann auch im vom Steckverbinder 1 getrennten Zustand des Stutzens 5 ihre Raststellung einnehmen, vgl. Fig. 1 bis 4.

Im gezeigten Ausführungsbeispiel sind zusätzlich zu den beiden in der Nähe eines jeweiligen Endes 14, 15 der Rastfeder liegenden seitlichen Abschnitten 13, 13' zwei voneinander beabstandet in einem mittleren Bereich der Rastfeder 3 liegende mittlere Abschnitte 12, 12' vorhanden. Vorzugsweise ist zusätzlich zu den seitlichen Abschnitten 13, 13' mindestens ein mittlerer Abschnitt 12, 12' vorhanden.

Zwischen den beiden im gezeigten Ausführungsbeispiel vorhandenen mittleren Abschnitten 12, 12'weist die Rastfeder 3 einen Betätigungsabschnitt 16 auf, der außerhalb der Hülse 2 liegt. Wenn der Betätigungsabschnitt 16 radial nach außen verschoben wird ("angehoben wird"), so wird auch der Abstand der benachbarten Abschnitte 12, 12' der Rastfeder 3 von der zentralen Längsachse der Hülse 2 vergrößert, bis diese über ihre gesamte Erstreckung radial außerhalb der Rastschulter 6 liegen.

Die Abschnitte 13, 13' der Rastfeder 3 weisen anschließend an ihre näher beim Betätigungsabschnitt 16 liegende Enden schräg zur radialen Richtung verlaufende Teilabschnitte auf, in denen sie an einem Rand (=an einem auf die Umfangsrichtung bezogenen Ende) der jeweiligen Durchtrittsöffnung 10' aufliegen. Wenn der Betätigungsabschnitt 16 angehoben wird, wird aufgrund der Verschiebung der Abschnitte 13, 13' gegenüber der Hülse 2 dadurch auch der Abstand der Abschnitte 13, 13' von der zentralen Längsachse 17 vergrößert, bis diese radial außerhalb der Rastschulter 6 liegen.

Der Betätigungsabschnitt 16 kann hierbei soweit angehoben werden, dass die Rastfeder 3 in eine weiter unten beschriebene verrastete Freigabestellung einrastet. Aber auch bereits bevor diese verrastete Freigabestellung erreicht ist, sind die Abschnitte 12, 12', 13, 13' bereits soweit nach außen verschoben, dass die Rastschulter 6 an diesen vorbeigeführt werden kann, wie dies insbesondere beim Zusammenstecken des Stutzens mit dem Steckverbinder 1 der Fall ist.

Anstelle der an den Rändern der Durchtrittsöffnungen 10' aufliegenden, schräg verlaufenden Teilabschnitte der Abschnitte 13, 13' könnten auch auf der Außenseite der Hülse 2 aufliegende Endabschnitte der Rastfeder 3 vorhanden sein, wie dies ebenfalls bereits bekannt ist, beispielsweise aus dem eingangs genannten Stand der Technik gemäß der WO 2005/045 299 A1.

Vorteilhafterweise ist die Rastfeder 3 im Bereich des Betätigungsabschnittes 16 von der Hülse 2 beabstandet, so dass zwischen die Hülse 2 und den Betätigungsabschnitt 16 ein Betätigungswerkzeug zum Anheben des Betätigungsabschnittes 16 eingeführt werden kann.

Die Abschnitte 12, 12', 13, 13', 16 der Rastfeder 3 werden durch entsprechende Abbiegungen der Rastfeder 3 ausgebildet. So kann beispielsweise innerhalb von jedem der Abschnitte 12, 12', 13, 13' eine einzelne Abbiegung vorhanden sein, über welche ein Verlauf mit einem schräg nach innen verlaufenden Teilabschnitt ausgebildet wird, an den ein schräg nach außen verlaufender Teilabschnitt anschließt (in eine der Umfangsrichtungen gesehen).

Die Hülse 2 umfasst einen im gezeigten Ausführungsbeispiel zweilagigen Mantelabschnitt 18 und einen mit dem Mantelabschnitt 18 über einen Verbindungssteg 19 verbundenen Halteabschnitt 20. Dieser Halteabschnitt 20 liegt außerhalb des Mantelabschnitts 18, wobei er vom Mantelabschnitt 18 beabstandet ist, so dass sich zwischen dem Mantelabschnitt 18 und dem Halteabschnitt 20 ein Zwischenraum 21 befindet.

Die beiden Lagen des Mantelabschnitts 18 werden von jeweils rohrstückförmigen (mit strukturierten Wandungen) Hülsenteilen 22, 23 gebildet. Das erste, weiter innen liegende Hülsenteil 22 bildet zusätzlich zum Mantelabschnitt 18 auch den Verbindungssteg 19 und den Halteabschnitt 20. Der Halteabschnitt 20 wird also durch eine Art Umstülpung des ersten Hülsenteils 22 gebildet.

Die beiden Hülsenteile 22, 23 liegen über einen Abschnitt der Längserstreckung des Mantelabschnitts 18 zumindest über einen Teil der Umfangserstreckung des Mantelabschnitts 18 aneinander an und sind in diesem Bereich aneinander befestigt, beispielsweise durch eine Presssitz. Im vom einsteckseitigen Ende 24 der Hülse 2 entfernt gelegenen Endabschnitt des Mantelabschnittes 18 weisen die beiden Hülsenteile 22, 23 einen Zwischenraum zwischen sich auf, in welchen das Ende des Schlauchs 25 einsteckbar ist, an dem der Steckverbinder 1 zu montieren ist. Zur Befestigung des Schlauchs 25 können die beiden Hülsenteile 22, 23 nach dem Einstecken des Schlauchs 25 gegen diesen verpresst werden (diese Verpressung ist in den Figuren der Einfachheit halber nicht dargestellt).

In der Raststellung der Rastfeder 3 liegen die Enden 14, 15 der Rastfeder 3 zwischen dem Mantelabschnitt 18 und dem Halteabschnitt 20 im Zwischenraum 21.

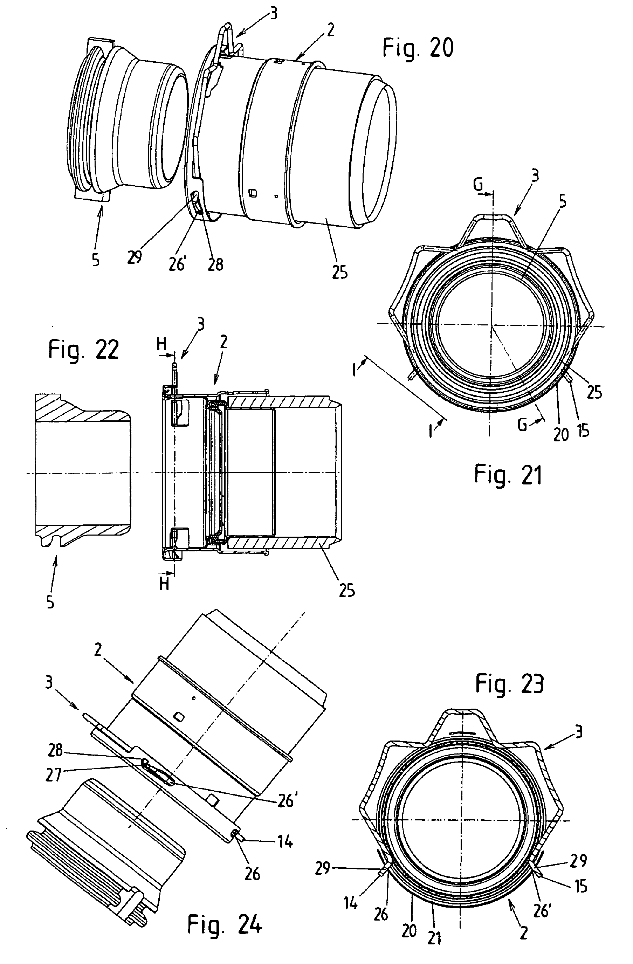

In der in den Figuren 20 - 24 dargestellten verrasteten Freigabestellung (=Parkstellung) der Rastfeder 3 ragen Abschnitte der Rastfeder 3 durch Schlitze 26, 26' im Halteabschnitt 20 der Hülse 2. Im gezeigten Ausführungsbeispiel sind dies die an die beiden Enden 14, 15 der Rastfeder 3 anschließenden Endabschnitte der Rastfeder 3, die jeweils durch einen Schlitz 26, 26' im Halteabschnitt 20 ragen. Die Schlitze 26, 26'verlaufen jeweils in die Umfangsrichtung der Hülse 2 und weisen einen näher beim einsteckseitigen Ende 24 liegenden Längsrand und einen weiter vom einsteckseitigen Ende 24 entfernt liegenden Längsrand auf. Einer dieser Längsränder, im gezeigten Ausführungsbeispiel der weiter vom einsteckseitigen Ende 24 entfernt liegende Längsrand, bildet einen Haltevorsprung 27 und eine in Umfangsrichtung an den Haltevorsprung 27 anschließende Haltevertiefung 28. Der Haltevorsprung 27 springt hierbei gegenüber der Haltevertiefung 28 in Richtung der Längsachse 17 der Hülse 2 vor.

In der verrasteten Freigabestellung der Rastfeder 3 ist eine jeweilige Raststelle 29 der Rastfeder 3 hinter dem Haltevorsprung 27 in die Haltevertiefung 28 eingerastet.

Wenn die Rastfeder 3 ausgehend von ihrer Raststellung, in welcher der Stutzen 5 im Steckverbinder 1 verrastbar ist, geöffnet wird, so gelangt ein die jeweilige Raststelle 29 aufweisender Abschnitt der Rastfeder 3, dies ist im gezeigten Ausführungsbeispiel ein an das jeweilige Ende 14, 15 der Rastfeder 3 anschließender Endabschnitt der Rastfeder 3, in Eingriff mit dem jeweiligen Schlitz 26, 26', d. h. er durchsetzt diesen. Beim weiteren Öffnen der Rastfeder 3 verschiebt sich der die Raststelle 29 aufweisende Abschnitt der Rastfeder 3 innerhalb des Schlitzes 26, 26', bis er den Haltevorsprung 27 überfährt und die Raststelle 29 in die Haltevertiefung 28 einrastet.

Beim Überfahren des jeweiligen Haltevorsprungs 27 verwindet sich die Rastfeder 3, so dass sie unter Entspannung dieser Verwindung federelastisch in die Rastvertiefung 28 einfährt. Anstelle einer Verwindung oder zusätzlich hierzu könnte auch eine Verbiegung der Rastfeder 3 im die Raststelle 29 aufweisenden Abschnitt vorgesehen sein. Der Haltevorsprung 27 könnte im Hinblick auf seinen (bezogen auf die Umfangsrichtung) schräg ansteigenden und auf der Seite der Haltevertiefung 28 rechtwinklig oder im Wesentlichen rechtwinklig abfallenden Verlauf auch als Rastnase bezeichnet werden. Auf der Seite der Haltevertiefung 28 könnte der Haltevorsprung 27 bezogen auf die Axialrichtung der Hülse 2 auch hinterschnitten ausgebildet sein.

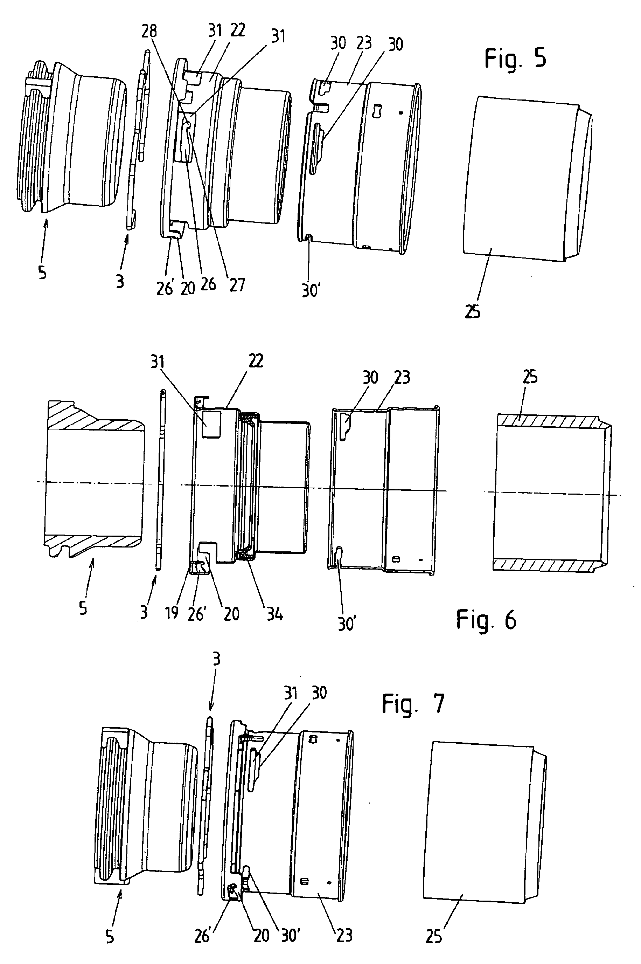

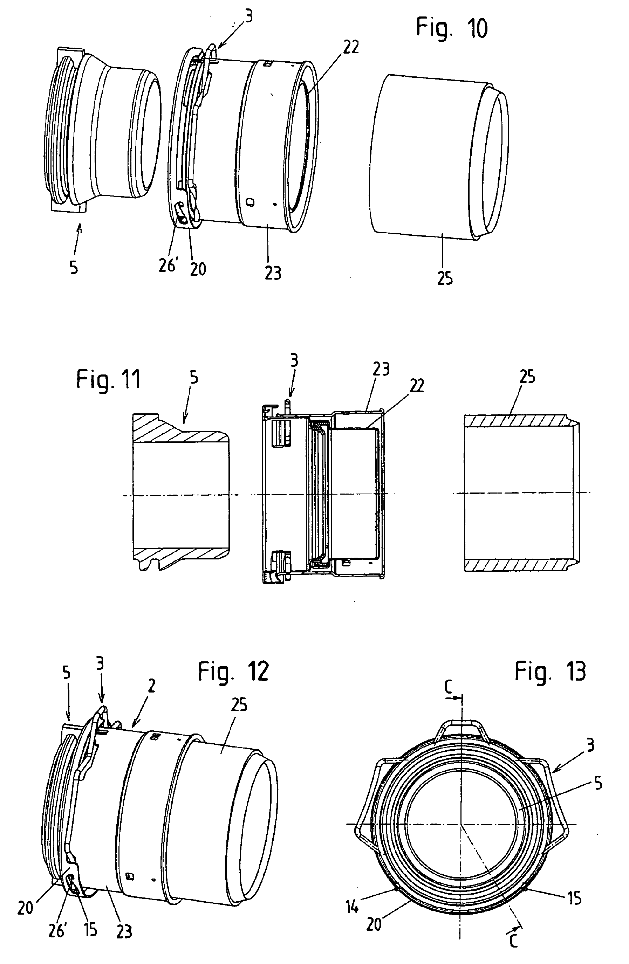

Der Montagevorgang des Steckverbinders 1 wird im Folgenden anhand der Figuren 5 bis 23 erläutert. Die beiden Hülsenteile 22, 23 werden zunächst soweit aufeinander gesteckt, dass schlitzförmige Ausnehmungen 30, 30' im zweiten Hülsenteil 23 zumindest teilweise mit Fensterausnehmungen 31 im ersten Hülsenteil 22 überlappen. Die schlitzförmigen Ausnehmungen 30, 30' liegen hierbei, bezogen auf die Axialrichtung der Hülse 2 noch neben dem Bereich der axialen Erstreckung des Halteabschnittes 20 des ersten Hülsenteils 22, vgl. Fig. 7 bis 9. In der Folge wird die Rastfeder 3 rechtwinklig zur Axialrichtung der Hülse 2 aufgeschoben, so dass die Abschnitte 12, 12', 13, 13' durch die überlappenden Bereiche der schlitzförmigen Ausnehmungen 30, 30' und der Fensterausnehmungen 31 ragen, vgl. Fig. 10 und 11. Der zweiten Hülsenteil 23 wird nunmehr weiter auf den ersten Hülsenteil 22 aufgeschoben, bis der fertig montierte Zustand erreicht ist, wie er beispielsweise aus den Fig. 1 bis 4 hervorgeht. Aufgrund der größeren axialen Erstreckung der Fensterausnehmungen 31 als derjenigen der schlitzförmigen Ausnehmungen 30, 30' überlappen die schlitzförmigen Ausnehmungen 30, 30' und die Fensterausnehmungen 31 weiterhin und bilden zusammen die Durchtrittsöffnungen 10, 10' der Hülse 2. Die Rastfeder 3 liegt nunmehr mit ihren Enden 14, 15 im Zwischenraum 21 zwischen dem Halteabschnitt 20 und dem Mantelabschnitt 18.

Wenn ausgehend vom in Fig. 1 bis 4 dargestellten getrennten Zustand des Steckverbinders 1 und des Stutzens 5 diese zusammengesteckt werden, so werden die Abschnitte 12, 12' der Rastfeder 3 durch die Schrägfläche 7 der Rastschulter 6 des Stutzens 5 bezogen auf die Radialrichtung nach außen verschoben und durch diese Verschiebung der Abschnitte 12, 12' und/oder ebenfalls durch die Schrägfläche 7 werden auch die Abschnitte 13, 13' der Rastfeder 3 bezogen auf die Radialrichtung nach außen verschoben, bis die Abschnitte 12, 12', 13, 13' hinter der Rastschulter 6 einrasten.

Um ein synchrones Einrasten der Abschnitte 13, 13' mit den Abschnitten 12, 12' zu erreichen (auch bei einem nicht ganz axial erfolgenden Zusammenstecken des Steckverbinders 1 mit dem Stutzen 5), ist es bevorzugt, dass bezogen auf die Richtung, in welche der Steckverbinder 1 auf den Stutzen 5 aufgesteckt wird, die Abschnitte 12, 12' den Abschnitten 13, 13' nachlaufen, wie dies bekannt ist, beispielsweise aus dem in der Beschreibungseinleitung genannten Stand der Technik gemäß der WO 2005/045 299 A1. Die Abschnitte 12, 12' können dadurch erst hinter die Rastschulter 6 einrasten, wenn die Abschnitte 13, 13' bereits bezogen auf die Axialrichtung hinter der Rastschulter 6 liegen (im Abstand zu dieser), wodurch ein synchrones Einrasten der Abschnitte 13, 13', 12, 12' erreicht wird. Um eine entsprechende Schrägstellung der Rastfeder 3 beim Zusammenstecken des Steckverbinders 1 mit dem Stutzen 5 zu erreichen, weisen die schlitzförmigen Ausnehmungen 30, 30' entsprechende Verläufe und/oder Aufweitungen auf. Im gezeigten Ausführungsbeispiel verschieben sich die Abschnitte 12, 12' beim Zusammenstecken des Steckverbinders 1 und des Stutzens 5 durch die Ausbuchtungen der schlitzförmigen Ausnehmungen 30 vom einsteckseitigen Ende 24 weg und die Abschnitte 13, 13' durch die Verläufe der schlitzförmigen Ausnehmungen 30' zum einsteckseitigen Ende 24 hin.

Eine Zwischenstellung beim Zusammenstecken ist in den Fig. 12 bis 15 dargestellt und der vollständig zusammengesteckte Zustand, in welchem der Stutzen 5 mit dem Steckverbinder 1 durch Verrastung ,mit der Rastfeder 3 verriegelt ist, ist in den Fig. 16 bis 19 dargestellt.

Zur Abdichtung zwischen dem Steckverbinder 1 und dem Stutzen 5 dient mindestens eine Dichtung 34, die im gezeigten Ausführungsbeispiel am Steckverbinder 1 gehalten ist, wie dies bevorzugt ist. Die Dichtung 34 ist hierbei in einer Nut an der Innenseite des Mantelabschnitts 18 angeordnet, welche im gezeigten Ausführungsbeispiel vom ersten Hülsenteil 22 gebildet wird. Auch eine Anordnung der Dichtung 34 oder mindestens eine der Dichtungen 34 am Stutzen 5 ist denkbar und möglich.

Um den Stutzen 5 und den Steckverbinder 1 wiederum zu trennen, wird bevorzugterweise zunächst die Rastfeder 3 in die zuvor beschriebene, in den Fig. 20 bis 24 dargestellte verrastete Freigabestellung gebracht. In der Folge kann der Stutzen 5 aus der Einstecköffnung 4 der Hülse 2 herausgezogen werden.

Beim Zusammenstecken des Steckverbinders 3 und des Stutzens 5 werden die Abschnitte 12, 12', 13, 13' vorzugsweise nicht so weit nach außen verschoben, dass die verrastete Freigabestellung der Rastfeder 3 erreicht wird.

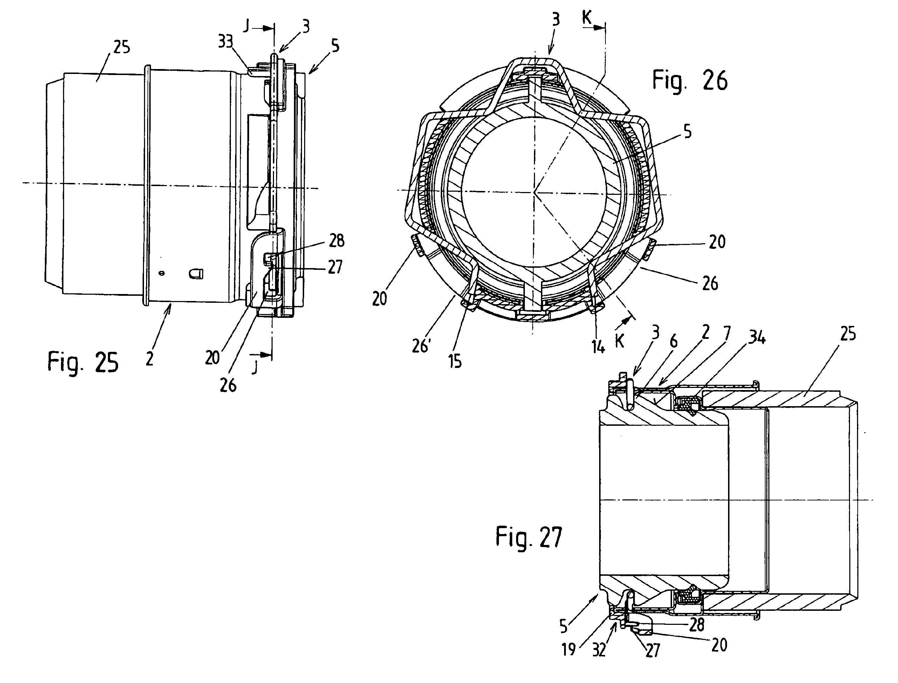

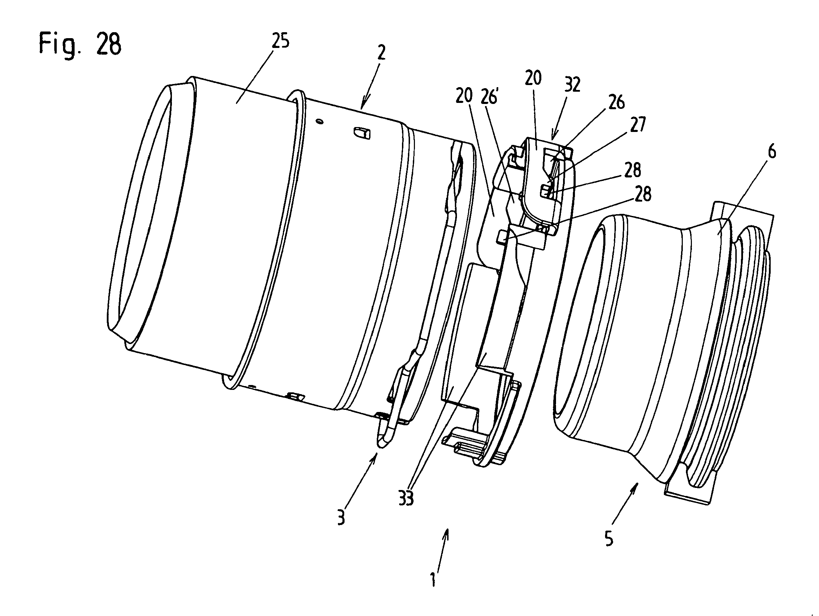

Eine weitere Ausbildungsform der Erfindung ist in den Fig. 25 bis 28 dargestellt. Im Unterschied zum zuvor gezeigten Ausführungsbeispiel werden hier die Halteabschnitte, gegenüber denen die Rastfeder 3 in der verrasteten Freigabestellung verrastet ist, von einem separaten, mit dem Mantelabschnitt 18 der Hülse 2 starr verbundenen Halteteil 32 der Hülse 2 gebildet, welches insbesondere aus Kunststoff besteht. Das Halteteil 32 besitzt mindestens einen Befestigungsabschnitt 33 zur Befestigung am Mantelabschnitt 18 der Hülse und mindestens einen Verbindungssteg 19 zur Verbindung mit dem bzw. einem jeweiligen Halteabschnitt 20. Im in den Fig. 25 bis 28 dargestellten Ausführungsbeispiel sind getrennte, in Umfangsrichtung der Hülse 2 voneinander beabstandete Halteabschnitte 20 vorgesehen. Es könnte auch ein durchgehender Halteabschnitt 20 vorgesehen sein, der beide Schlitze 26, 26' aufweist, welche mit den die Raststellen 29 aufweisenden Abschnitten der Rastfeder 3 bei der Verstellung der Rastfeder 3 in die verrastete Freigabestellung zusammenwirken.

Die Raststellen 29 befinden sich wiederum im Bereich der Endabschnitte der Rastfeder 3, wie dies bevorzugt ist und die Enden 14, 15 der Rastfeder 3 befinden sich in der Raststellung der Rastfeder 3 unterhalb der Halteabschnitte 20, d. h. im jeweiligen Zwischenraum 21 zwischen dem Halteabschnitt 20 und dem Mantelabschnitt 18 der Hülse 2.

Der Mantelabschnitt 18 der Hülse 2 ist in diesem Ausführungsbeispiel einteilig ausgebildete, wobei durch eine im Bereich des einsteckseitigen Endes der Hülse 2 liegende Umbiegung um 180° erste und zweite Lagen des Mantelabschnitts 18 ausgebildet werden, zwischen welche am vom einsteckseitigen Ende 24 abgewandten Ende ein Schlauch 25 einsteckbar ist.

Der Mantelabschnitt 18 könnte aber auch wiederum aus separaten ersten und zweiten Hülsenteilen ausgebildet sein, die jeweils eine Lage des Mantelabschnitts 18 bilden. Auch bei einer Ausbildung ohne separatem Halteteil 32 könnte die Hülse nur ein einzelnes Hülsenteil aufweisen, wobei beispielsweise dieses am freien Rand des Halteabschnittes 20 um 180° umgefaltet sein könnte, um eine zweilagige Ausbildung, insbesondere im Bereich des Mantelabschnitts 18 zu erzielen, welche zur Verbindung mit einem Schlauch 25 vorteilhaft ist.

In weiteren Ausführungsbeispielen wäre es beispielsweise auch denkbar und möglich, dass mindestens eine Raststelle 29 der Rastfeder 3 nicht in einem Endabschnitt der Rastfeder 3 angeordnet ist, beispielsweise könnte noch ein zur Außenseite des Mantelabschnitts 18 gebogener und an diesem endseitig anliegender Abschnitt anschließen.

Obwohl die Ausbildung mit einer ersten und einer zweiten Raststelle bevorzugt ist, könnte eine verrastete Freigabestellung auch durch nur eine Raststelle der Rastfeder 3, an welcher diese in einer Haltevertiefung verrastet ist, erreicht werden. Es könnte dann ein einzelner, in einem Halteabschnitt 20 angeordneter Schlitz vorgesehen sein, der diese Haltevertiefung ausbildet.

Im gezeigten Ausführungsbeispiel sind vier Riegelstellen vorhanden, in denen jeweils in der Raststellung der Rastfeder 3 ein durch die jeweilige Durchtrittsöffnung 10, 10' ragender Abschnitt 12, 12', 13, 13' der Rastfeder mit dem Stutzen 5 verrastet ist. Es könnten auch mehr oder weniger Riegelstellen und entsprechend mehr oder weniger Durchtrittsöffnungen 10, 10' und Abschnitte 12, 12', 13, 13'vorhanden sein. Obwohl weniger bevorzugt, könnte in der Raststellung der Rastfeder diese auch nur an einer Riegelstelle mit einem eingesteckten und verrasteten Stutzen 5 zusammenwirken.

Ein erfindungsgemäßer Steckverbinder 1 kann nicht nur an einem flexiblen Schlauch sondern auch an einem Rohr oder an einem Teil angeschlossen sein, welches einen medienführenden Kanal aufweist. Das Gleiche gilt für den Stutzen 5.

Die Rastfeder 3 könnte sich auch über mehr als 360° der Umfangsrichtung der Hülse 2 erstrecken.

Mittels einer erfindungsgemäßen Steckverbindung können insbesondere Verbindungen von Abschnitten von Kühlwasserleitungen von Verbrennungsmotoren oder Ladeluftleitungen von Verbrennungsmotoren hergestellt werden. In solchen herrscht ein relativ geringer Druck, beispielsweise bis 6 bar.

### Legende

### zu den Hinweisziffern:

- 1: Steckverbinder
- 2: Hülse
- 3: Rastfeder
- 4: Einstecköffnung
- 5: Stutzen
- 6: Rastschulter
- 7: Schrägfläche
- 8: Verriegelungsfläche
- 9: einsteckseitiges Ende
- 10,10': Durchtrittsöffnung
- 11: Innenraum
- 12,12': Abschnitt
- 13,13': Abschnitt
- 14: Ende
- 15: Ende
- 16: Betätigungsabschnitt
- 17: zentrale Längsachse
- 18: Mantelabschnitt
- 19: Verbindungssteg
- 20: Halteabschnitt
- 21: Zwischenraum
- 22: erstes Hülsenteil
- 23: zweites Hülsenteil
- 24: einsteckseitiges Ende
- 25: Schlauch
- 26,26': Schlitz
- 27: Haltevorsprung
- 28: Haltevertiefung
- 29: Raststelle
- 30,30': schlitzförmige Ausnehmung
- 31: Fensterausnehmung
- 32: Halteteil
- 33: Befestigungsabschnitt
- 34: Dichtung

## Patentansprüche

1. Steckverbinder zum Verbinden von Leitungen für flüssige oder gasförmige Medien, mit einer Hülse (2), die eine Einstecköffnung (4) aufweist, in die ein Stutzen (5) einsteckbar ist, und einer die Hülse (2) zumindest über einen Teil ihres Umfangs umgebende Rastfeder (3), welche zwischen einer Raststellung zum Verrasten des mit dem Steckverbinder zusammengesteckten Stutzens (5) und einer gegenüber der Hülse (2) verrasteten Freigabestellung, in der die Verrastung mit dem Stutzen (5) gelöst ist und der Stutzen (5) aus der Einstecköffnung (4) der Hülse (2) herausziehbar ist, verstellbar ist, wobei die Rastfeder (3) zumindest in ihrer Raststellung über mindestens einen Abschnitt (12, 12', 13, 13') ihrer Längserstreckung, in welchem sie mit dem Stutzen (5) verrastbar ist, durch eine Durchtrittsöffnung (10, 10') der Hülse (2) in den von der Hülse (2) umgebenen Innenraum (11) ragt und wobei die Rastfeder (3) in ihrer verrasteten Freigabestellung an mindestens einer Raststelle (29) der Rastfeder (3) hinter einen Haltevorsprung (27) der Hülse (2) in eine Haltevertiefung (28) der Hülse (2) eingerastet ist, **dadurch gekennzeichnet, dass** der Haltevorsprung (27) gegenüber der Haltevertiefung (28) in axialer Richtung der Hülse (2) vorspringt.

2. Steckverbinder nach Anspruch 1, **dadurch gekennzeichnet, dass** die Rastfeder (5) in ihrer verrasteten Freigabestellung an einer ersten und einer zweiten Raststelle (29), die in Umfangsrichtung der Hülse (2) voneinander beabstandet sind, hinter einen jeweiligen Haltevorsprung (27) in eine jeweilige Haltevertiefung (28) eingerastet ist.

3. Steckverbinder nach Anspruch 1 oder 2, **dadurch gekennzeichnet, dass** eine jeweilige Raststelle (29) der Rastfeder (3), an der die Rastfeder (3) in der verriegelten Freigabestellung in eine jeweilige Haltevertiefung (28) der Hülse (2) eingerastet ist, in einem jeweiligen Endabschnitt der Rastfeder (3) liegt.

4. Steckverbinder nach einem der Ansprüche 1 bis 3, **dadurch gekennzeichnet, dass** die Rastfeder (3) zumindest in der Raststellung über mindestens zwei in Umfangsrichtung der Hülse (2) voneinander beabstandete Abschnitte (12, 12', 13, 13') ihrer Längserstreckung, in welchen sie mit dem mit dem Steckverbinder zusammengesteckten Stutzen (5) verrastbar ist, durch eine jeweilige Durchtrittsöffnung (10, 10') der Hülse (2) in den von der Hülse (2) umgebenen Innenraum (11) ragt.

5. Steckverbinder nach einem der Ansprüche 1 bis 4, **dadurch gekennzeichnet, dass** die Rastfeder (3) zumindest in der verrasteten Freigabestellung der Rastfeder (3) im Bereich einer jeweiligen Raststelle (29) durch einen den Haltevorsprung (27) und die Haltevertiefung (28) bildenden Schlitz (26, 26') ragt, der in einem Halteabschnitt (20) der Hülse (2) angeordnet ist, welcher von einem Mantelabschnitt (18) der Hülse (2) in radialer Richtung der Hülse (2) beabstandet ist, wobei im Mantelabschnitt (18) der Hülse (2) die mindestens eine Durchtrittsöffnung (10, 10') angeordnet ist, durch welche die Rastfeder (3) zur Verrastung mit dem mit dem Steckverbinder (1) zusammengesteckten Stutzen (5) zumindest in der Raststellung der Rastfeder (3) tritt.

6. Steckverbinder nach Anspruch 5, **dadurch gekennzeichnet, dass** die beiden Enden (14, 15) der Rastfeder (3) in der Raststellung der Rastfeder (3) in einem Zwischenraum (21) zwischen dem Halteabschnitt (20) bzw. einem jeweiligen Halteabschnitt (20)und dem Mantelabschnitt (18) liegen.

7. Steckverbinder nach Anspruch 6, **dadurch gekennzeichnet, dass** der mindestens eine Halteabschnitt (20) der Hülse (2) mit dem Mantelabschnitt (18) über einen Verbindungssteg (19) verbunden ist.

8. Steckverbinder nach einem der Ansprüche 5 bis 7, **dadurch gekennzeichnet, dass** der Halteabschnitt (20) von einem umgebogenen Abschnitt eines aus Blech bestehenden Hülsenteils (22, 23) gebildet wird.

9. Steckverbinder nach einem der Ansprüche 5 bis 8, **dadurch gekennzeichnet, dass** die Hülse (2) ein erstes Hülsenteil (22) und ein zweites Hülsenteil (23) umfasst, welches im Bereich des Mantelabschnitts (18) das erste Hülsenteil (22) umgibt.

10. Steckverbinder nach Anspruch 9, **dadurch gekennzeichnet, dass** der mindestens eine Verbindungssteg (19) und der mindestens eine Halteabschnitt (20) vom ersten Hülsenteil (22) gebildet werden.

## Claims

1. Connector for connecting pipes for liquid or gaseous media, comprising a sleeve (2) with an insertion orifice (4) in which a fitting (5) can be inserted and a locating spring (3) surrounding the sleeve (2) around at least a part of its circumference which can be displaced between a located position for locking the fitting (5) assembled with the connector and a release position locked to the sleeve (2) in which the locking action with the fitting (5) is released and the fitting (5) can be pulled out of the insertion orifice (4) of the sleeve (2), and at least in its located position in which it can be locked to the fitting (5) across at least a portion (12, 12', 13, 13') of its longitudinal extension, the locating spring (3) extends through a passage orifice (10, 10') of the sleeve (2) into the interior (11) surrounded by the sleeve (2), and in its locked release position, the locating spring (3) is locked behind a retaining projection (27) of the sleeve (2) in a retaining recess (28) of the sleeve (2) at one locking point (29) at least, **characterised in that** the retaining projection (27) projects out from the retaining recess (28) in the axial direction of the sleeve (2).

2. Connector as claimed in claim 1, **characterised in that**, in its locked release position, the locating spring (5) is locked behind a respective retaining projection (27) in a respective retaining recess (28) at a first and a second locking point (29) disposed at a distance apart from one another in the circumferential direction of the sleeve (2).

3. Connector as claimed in claim 1 or 2, **characterised in that** a respective locking point (29) of the locating spring (3), at which the locating spring (3) is locked into a respective retaining recess (28) of the sleeve (2) in the locked release position, lies in a respective end portion of the locating spring (3).

4. Connector as claimed in one of claims 1 to 3, **characterised in that**, at least in the located position in which it can be locked to the fitting (5) assembled with the connector by means of two portions (12, 12', 13, 13') of its longitudinal extension spaced apart from one another in the circumferential direction of the sleeve (2), the locating spring (3) extends through a respective passage orifice (10, 10') of the sleeve (2) into the interior (11) surrounded by the sleeve (2).

5. Connector as claimed in one of claims 1 to 4, **characterised in that**, at least in the locked release position of the locating spring (3) in the region of a respective locking point (29), the locating spring (3) extends through a slot (26, 26') forming the retaining projection (27) and the retaining recess (28) disposed in a retaining portion (20) of the sleeve (2) which is spaced at a distance apart from a casing portion (18) of the sleeve (2) in the radial direction of the sleeve (2), and the at least one passage orifice (10, 10') is disposed in the casing portion (18) of the sleeve (2) through which the locating spring (3) passes in order to lock to the fitting (5) assembled with the connector (1), at least when the locating spring (3) is in the located position.

6. Connector as claimed in claim 5, **characterised in that** the two ends (14, 15) of the locating spring (3) lie in a gap (21) between the retaining portion (20) or a respective retaining portion (20) and the casing portion (18) when the locating spring (3) is in the located position.

7. Connector as claimed in claim 6, **characterised in that** the at least one retaining portion (20) of the sleeve (2) is connected to the casing portion (18) by means of a connecting web (19).

8. Connector as claimed in one of claims 5 to 7, **characterised in that** the retaining portion (20) is formed by a bent portion of a sleeve part (22, 23) made from sheet metal.

9. Connector as claimed in one of claims 5 to 8, **characterised in that** the sleeve (2) comprises a first sleeve part (22) and a second sleeve part (23) surrounding the first sleeve part (22) in the region of the casing portion (18).

10. Connector as claimed in claim 9, **characterised in that** the at least one connecting web (19) and the at least one retaining portion (20) are formed by the first sleeve part (22).

## Revendications

1. Raccord femelle permettant de raccorder des conduites transportant des milieux liquides ou gazeux, comportant un manchon (2) muni d'un orifice d'enfichage (4), dans lequel peut s'enficher une tubulure (5), et un ressort de verrouillage (3), qui entoure le manchon (2) sur au moins une partie de sa périphérie et qui peut être réglé entre une position de verrouillage destinée à bloquer la tubulure (5) enfichée et une position de déverrouillage encliquetée sur le manchon (2), dans laquelle le verrouillage avec la tubulure (5) est désolidarisé et la tubulure (5) peut être tirée hors de l'orifice d'enfichage (4) du manchon (2), ledit ressort de verrouillage (3), au moins dans sa position de verrouillage, s'avançant avec au moins un tronçon (12, 12', 13, 13') de sa longueur, dans lequel il peut être bloqué avec la tubulure (5), dans le volume intérieur (11) entouré par le manchon (2) en passant à travers un orifice de passage (10, 10') du manchon (2), et, dans sa position de déverrouillage encliquetée, ledit ressort de verrouillage (3) s'engageant, au moins au niveau d'une zone d'encliquetage (29) du ressort de verrouillage (3), derrière une saillie de retenue (27) du manchon (2) dans un creux de retenue (28) du manchon (2), **caractérisé en ce que** la saillie de retenue (27) s'avance par rapport au creux de retenue (28) dans la direction axiale du manchon (2).

2. Raccord femelle selon la revendication 1, **caractérisé en ce que**, dans sa position de déverrouillage encliquetée, le ressort de verrouillage (3) est engagé, au niveau d'une première et d'une deuxième zone d'encliquetage (29) écartées l'une de l'autre dans la direction circonférentielle du manchon (2), derrière une saillie de retenue (27) appropriée dans un creux de retenue (28) approprié.

3. Raccord femelle selon la revendication 1 ou 2, **caractérisé en ce que** dans un tronçon final approprié du ressort de verrouillage (3) se situe une zone d'encliquetage (29) appropriée du ressort de verrouillage (3), au niveau de laquelle le ressort de verrouillage (3), dans sa position de déverrouillage encliquetée, est engagé dans un creux de retenue (28) approprié du manchon (2).

4. Raccord femelle selon l'une quelconque des revendications 1 à 3, **caractérisé en ce que**, au moins dans la position de verrouillage, le ressort de verrouillage (3) s'avance dans le volume intérieur (11) entouré par le manchon (2) en passant à travers un orifice de passage (10, 10') du manchon (2), avec au moins deux tronçons (12, 12', 13, 13') de sa longueur, qui sont séparés l'un de l'autre dans la direction circonférentielle du manchon (2) et dans lesquels ledit ressort peut être bloqué avec la tubulure (5) enfichée dans le raccord femelle.

5. Raccord femelle selon l'une quelconque des revendications 1 à 4, **caractérisé en ce que**, au moins dans la position de déverrouillage encliquetée du ressort de verrouillage (3), ledit ressort de verrouillage (3) s'avance, dans la région d'une zone d'encliquetage (29) appropriée, à travers une fente (26, 26'), qui forme la saillie de retenue (27) et le creux de retenue (28) et qui est disposée dans un tronçon de retenue (20) du manchon (2), lequel est écarté d'un tronçon de paroi latérale (18) du manchon (2) dans la direction radiale du manchon (2), ledit au moins un orifice de passage (10, 10') étant agencé dans le tronçon de paroi latérale (18) du manchon (2) et le ressort de verrouillage (3) passant à travers ledit orifice de passage en vue d'être bloqué avec la tubulure (5) enfichée dans le raccord femelle (1) au moins dans la position de verrouillage du ressort de verrouillage (3).

6. Raccord femelle selon la revendication 5, **caractérisé en ce que** les deux extrémités (14, 15) du ressort de verrouillage (3) sont situées, dans la position de verrouillage du ressort de verrouillage (3), dans un espace intermédiaire (21) entre le tronçon de retenue (20) ou un tronçon de retenue (20) approprié et le tronçon de paroi latérale (18).

7. Raccord femelle selon la revendication 6, **caractérisé en ce que** ledit au moins un tronçon de retenue (20) du manchon (2) est relié au tronçon de paroi latérale (18) par l'intermédiaire d'une nervure de jonction (19).

8. Raccord femelle selon l'une quelconque des revendications 5 à 7, **caractérisé en ce que** le tronçon de retenue (20) est formé par un tronçon replié d'une partie (22, 23) métallique du manchon.

9. Raccord femelle selon l'une quelconque des revendications 5 à 8, **caractérisé en ce que** le manchon (2) comporte une première partie (22) et une deuxième partie (23) entourant la première partie (22) dans la zone du tronçon de paroi latérale (18).

10. Raccord femelle selon la revendication 9, **caractérisé en ce que** ladite au moins une nervure de jonction (19) et ledit au moins un tronçon de retenue (20) sont formés par la première partie (22) du manchon.
